# EUROPEAN PATENT APPLICATION

(11) **EP 4 768 336 A1**
(43) Date of publication of application: **01.07.2026**
(21) Application number: 24855394.3
(22) Date of filing: 31.05.2024
(51) Int. Cl.: B60Q 3/208, B60Q 3/78, B60J 7/00

(54) **VEHICLE AND METHOD FOR CONTROLLING SKYLIGHT THEREOF, AND SKYLIGHT ASSEMBLY**

(30) Priority: 24.08.2023 CN 202311082653
(71) Applicant: BYD Company Limited, Shenzhen, Guangdong 518118 (CN)
(72) Inventor: YI, Bengang, Shenzhen, Guangdong 518118 (CN); QIU, Shoufa, Shenzhen, Guangdong 518118 (CN); QING, Minghao, Shenzhen, Guangdong 518118 (CN); WANG, Kai, Shenzhen, Guangdong 518118 (CN); CHEN, Zhixin, Shenzhen, Guangdong 518118 (CN)
(74) Representative: Mathys & Squire
(86) International application number: PCT/CN2024/096669
(87) International publication number: WO 2025/039664

(57) **Abstract**

This application relates to the field of vehicle control technologies, and specifically, to a vehicle and a sunroof control method, and a sunroof assembly. The method is applied to a vehicle. A sunroof and a sunshade apparatus configured to obstruct the sunroof are disposed on the top of the vehicle. The method includes: receiving an instruction for enabling the sunroof to be in a starry sky mode; and controlling, according to the instruction, a luminous area of the sunroof and an area of an obstructed region of the sunroof that is obstructed by the sunshade apparatus, where a difference between the luminous area of the sunroof and an area of an unobstructed region of the sunroof that is not obstructed by the sunshade apparatus is less than a preset value.

## Description

### CROSS-REFERENCE TO RELATED APPLICATIONS

This application is based on Chinese Patent Application No. 202311082653.4, filed on August 24, 2023, and claims priority to the foregoing Chinese Patent Application, which is incorporated herein by reference in its entirety.

### TECHNICAL FIELD

This application relates to the field of vehicle control technologies, and in particular, to a vehicle and a sunroof control method , and a sunroof assembly.

### BACKGROUND

A starry sky sunroof and a sunshade apparatus can be mounted on the top of a vehicle. The sunshade apparatus can obstruct or expose the starry sky sunroof. The starry sky sunroof can present starry sky effect to create a more comfortable and romantic atmosphere in the vehicle.

Currently, the starry sky sunroof only presents a starry sky effect after the sunshade apparatus moves to a position where the starry sky sunroof is completely unobstructed. Therefore, it will be understood that the starry sky sunroof currently takes a long time to achieve the starry sky effect.

### SUMMARY

An objective of embodiments of this application is to provide a new vehicle sunroof control method.

According to a first aspect of this application, a vehicle sunroof control method is provided, applied to a vehicle, wherein a sunroof and a sunshade apparatus configured to obstruct the sunroof are disposed on the top of the vehicle, and the method includes: receiving an instruction for enabling the sunroof to be in a starry sky mode; and controlling, according to the instruction, a luminous area of the sunroof and an area of an obstructed region of the sunroof that is obstructed by the sunshade apparatus, wherein a difference between the luminous area of the sunroof and an area of an unobstructed region of the sunroof that is not obstructed by the sunshade apparatus is less than a preset value.

Optionally, a light-emitting apparatus configured to emit light for the sunroof is disposed on the top of the vehicle. The light-emitting apparatus extends along a longitudinal direction of the sunroof, and the longitudinal direction of the sunroof is a longitudinal direction of the vehicle.

Optionally, the light-emitting apparatus includes a plurality of light-emitting elements, and the plurality of light-emitting elements are sequentially arranged along the longitudinal direction of the sunroof.

Optionally, the instruction includes a first instruction. Controlling, according to the instruction, the luminous area of the sunroof and the area of the obstructed region of the sunroof that is obstructed by the sunshade apparatus includes: controlling, according to the first instruction, the sunshade apparatus to move to decrease the area of the obstructed region; and
controlling, according to the first instruction, the plurality of light-emitting elements, to enable light-emitting elements located in the unobstructed region to be in an on state, and light-emitting elements located in the obstructed region to be in an off state, to control the luminous area of the sunroof.

Optionally, the obstructed state is in a partially obstructed state, and the unobstructed region includes an original unobstructed region and a new unobstructed region.

Optionally, in the plurality of light-emitting elements, light-emitting elements located in the new unobstructed region are simultaneously turned on when the sunshade apparatus moves to decrease the area of the obstructed region.

Optionally, the instruction includes a second instruction. Controlling, according to the instruction, the luminous area of the sunroof and the area of the obstructed region of the sunroof that is obstructed by the sunshade apparatus includes: controlling, according to the second instruction, the sunshade apparatus to move to increase the area of the obstructed region; and
controlling, according to the second instruction, the plurality of light-emitting elements, to enable light-emitting elements located in the unobstructed region to be in an on state, and light-emitting elements located in the obstructed region to be in an off state, to control the luminous area of the sunroof.

Optionally, the obstructed state includes a partially obstructed state, and the obstructed region includes an original obstructed region and a new obstructed region.

Optionally, in the plurality of light-emitting elements, light-emitting elements located in the new obstructed region are simultaneously turned off when the sunshade apparatus moves to increase the area of the obstructed region.

Optionally, the method further includes: in a process of controlling the sunshade apparatus to move, when a third instruction used to instruct the sunshade apparatus to stop moving is received, controlling the sunshade apparatus to stop moving and maintaining a current status of the light-emitting apparatus.

Optionally, the method further includes: in response to an instruction for exiting the starry sky mode, controlling the light-emitting apparatus to be in an off state.

Optionally, the instruction for exiting the starry sky mode includes any one of the following instructions: an instruction for opening the sunroof; an instruction for opening a vehicle door; and an instruction for disabling the starry sky mode.

According to a second aspect of this application, a vehicle sunroof assembly is provided. The sunroof assembly includes: a sunroof; and a sunshade apparatus, wherein the sunshade apparatus is movable relative to the sunroof to obstruct or expose the sunroof, an luminous area of the sunroof changes with an area of an obstructed region of the sunroof that is obstructed by the sunshade apparatus, and a difference between the luminous area of the sunroof and an area of an unobstructed region of the sunroof that is not obstructed by the sunshade apparatus is less than a preset value.

Optionally, the sunroof assembly further includes a drive mechanism and an illumination control apparatus. The drive mechanism is configured to drive the sunshade apparatus to move relative to the sunroof, and the illumination control apparatus is configured to adjust the luminous area of the sunroof.

Optionally, the drive mechanism is connected to the illumination control apparatus. The drive mechanism is further configured to send a first signal representing a position of the sunshade apparatus relative to the sunroof, and the illumination control apparatus is further configured to adjust the luminous area of the light-emitting apparatus based on the first signal.

According to a third aspect of this application, a vehicle is provided, wherein a sunroof, a sunshade apparatus, and a light-emitting apparatus are disposed on the top of the vehicle, and the vehicle controls the sunshade apparatus by using the control method according to any one of the foregoing aspects of this application.

According to a fourth aspect of this application, a vehicle is provided, including the sunroof assembly according to any one of the second aspect of this application.

Beneficial effects of embodiments of this application include: after the vehicle receives the instruction for enabling the sunroof to be in the starry sky mode, the luminous area of the sunroof and the area of the obstructed region of the sunroof that is obstructed by the sunshade apparatus can be controlled according to the instruction, and the difference between the luminous area of the sunroof and the area of the unobstructed region of the sunroof that is not obstructed by the sunshade apparatus is less than the preset value. In other words, the method according to this application enables the vehicle sunroof to be luminous to present the starry sky effect when the sunshade apparatus moves. Compared with a manner in which the starry sky effect can be presented only after the sunshade apparatus moves to a position where the starry sky sunroof is completely unobstructed, this application reduces the time required for the sunroof to present the starry sky effect, thereby reducing the time a user spends waiting for the sunroof to present the starry sky effect, and effectively enhancing user experience, and can further enable the sunroof to present the starry sky effect based on regions, thereby improving flexibility of presenting the starry sky effect of the sunroof.

Other features and advantages of the embodiments of this application will become clear from the following detailed description of exemplary embodiments of this application with reference to the accompanying drawings.

### BRIEF DESCRIPTION OF DRAWINGS

The accompanying drawings, which are incorporated in and form part of the specification, illustrate embodiments of this application and together with the description thereof, serve to explain principles of the embodiments of this application.
FIG. 1 is a schematic flowchart of a vehicle sunroof control method according to an embodiment of this application.
FIG. 2 is a schematic flowchart of another vehicle sunroof control method according to an embodiment of this application.
FIG. 3 is a schematic flowchart of another vehicle sunroof control method according to an embodiment of this application.
FIG. 4 is a schematic flowchart of another vehicle sunroof control method according to an embodiment of this application.
FIG. 5 is a diagram of a structure of a vehicle sunroof assembly according to an embodiment of this application.

### DESCRIPTION OF EMBODIMENTS

Various exemplary embodiments of this application will now be described in detail with reference to the accompanying drawings. It will be noted that, unless otherwise specifically stated, the relative arrangements, numerical expressions, and numerical values of components and steps set forth in these embodiments do not limit the scope of the present application.

The following description of at least one exemplary embodiment is merely illustrative and is in no way intended to limit the present application and its application or use.

Technologies, methods, and devices known to people of ordinary skill in the relevant art may not be discussed in detail. But in proper cases, the technologies, methods, and devices should be considered as part of the specification.

In all examples shown and discussed herein, any specific value will be interpreted as merely exemplary and not as limitations. Therefore, other examples of exemplary embodiments may have different values.

It should be noted that similar reference numerals and letters indicate similar items in the following accompany drawings. Therefore, once an item is defined in one figure, the item does not need to be further discussed in subsequent figures.

To facilitate understanding of the method according to an embodiment of this application, a vehicle sunroof assembly involved in the embodiment of this application is first described.

A vehicle sunroof assembly according to an embodiment of this application may include a sunroof and a sunshade apparatus. The sunroof may be a fastened apparatus mounted on the top of the vehicle, that is, a closed sunroof. Alternatively, the sunroof may be a movable apparatus mounted on the top of the vehicle, that is a sunroof available to be opened, such as an internal sunroof or an external sliding sunroof. In addition, the sunroof may be a panoramic sunroof or a segmented sunroof. For example, the sunroof may be a closed panoramic sunroof. A type of the sunroof is not specifically limited in the embodiments of this application.

The sunshade apparatus may be a sunshade curtain or a sunshade panel. The sunshade apparatus may be disposed on the top of the vehicle. In some embodiments, the sunshade apparatus is movably disposed below the sunroof. For example, the sunshade apparatus may be disposed below the sunroof in a sliding manner. Certainly, there are many specific structural forms and arrangement manners of the sunshade apparatus, which will not be described in detail in the embodiments of this application.

The vehicle sunroof assembly may further include a light-emitting apparatus which can emit light for the sunroof. The light-emitting apparatus may extend along a longitudinal direction of the sunroof. The longitudinal direction of the sunroof is a longitudinal direction of the vehicle. The light-emitting apparatus may include a plurality of light-emitting elements, and the plurality of light-emitting elements are sequentially arranged along the longitudinal direction of the sunroof.

In some embodiments, the light-emitting element may be a light-emitting diode (LED). It will be understood that there are many types of light-emitting elements, which are not specifically limited in the embodiments of this application.

In some embodiments, the plurality of light-emitting elements may be distributed on the sunroof in a specific order. For example, the plurality of light-emitting elements may be equally spaced apart on the sunroof.

In some embodiments, the plurality of light-emitting elements may be divided into a plurality of groups. Each group of light-emitting elements includes at least two light-emitting elements, and each group of light-emitting elements may be distributed on the sunroof by using a structure such as a light strip. For example, each group of light-emitting elements may be equally spaced apart on the lamp strip. The plurality of light strips may be sequentially arranged along the longitudinal direction of the sunroof.

In actual applications, the sunshade apparatus may be controlled to move by using a domain controller of the vehicle according to user requirements. When the sunshade apparatus is retracted, the sunroof is exposed. When the sunshade apparatus is extended, the sunshade apparatus obstructs the sunroof. When the sunroof is obstructed, sunshade effect can be achieved. When the sunroof is exposed, the vehicle can be illuminated by the light-emitting apparatus, so that the region of the sunroof that is not obstructed by the sunshade apparatus presents starry sky effect. Certainly, when the sunroof is exposed, the sunroof may further have other functions, which are not described in detail herein.

In the embodiment of this application, the starry sky effect means atmosphere effect that simulates a starry sky at night. An implementation principle of the starry sky effect is as follows: some fluorescent substances or reflective substances in the shape of stars or moons are covered on a surface of the sunroof located inside the vehicle, and a plurality of light-emitting elements are disposed on the surface. When the plurality of light-emitting elements are turned on, light emitted by the light-emitting elements illuminates the fluorescent substances or the reflective substances on the sunroof, and the region of the sunroof that is not obstructed by the sunshade apparatus area presents effect of "a sky full of stars".

In addition, by adjusting light-emitting colors of the light-emitting elements, brightness of the light-emitting elements, a number of light-emitting elements that are turned on, and the like, different starry sky effects can be achieved to create different atmospheres. When night falls, a user can control the vehicle to enable the sunroof to be in a starry sky mode, experiencing various unique starry sky effects and thereby relaxing. When on a date, the user can control the vehicle to enable the sunroof to be in the starry sky mode, creating a very unique high-level halo inside the vehicle, increasing the sense of tenderness and romance.

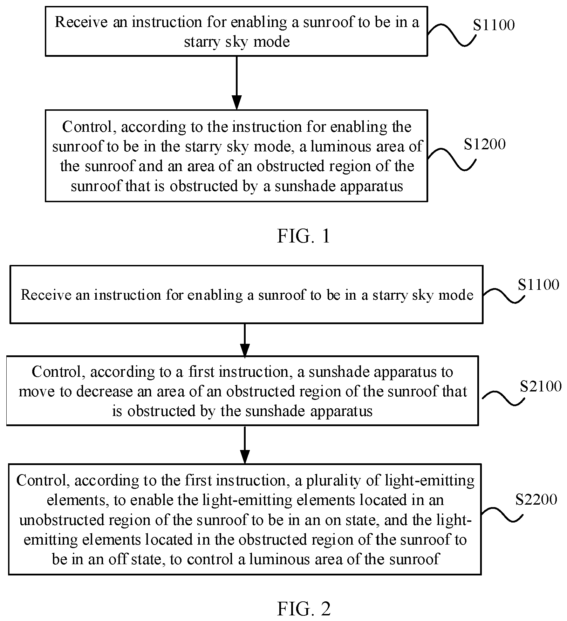

FIG. 1 is a flowchart of a vehicle sunroof control method according to an embodiment of this application. The method is applied to a vehicle, for example, an electronic device on a vehicle. The electronic device may be a domain controller of the vehicle. Optionally, the vehicle may be a sedan, an off-road vehicle, a sport utility vehicle (SUV), or a commercial vehicle. Certainly, the vehicle may alternatively be other types of vehicles, and the vehicle type is not particularly limited herein. As shown in FIG. 1, the method may include the steps as follows.

Step S1100: receive an instruction for enabling a sunroof to be in a starry sky mode.

In the embodiment of this application, the instruction for enabling the sunroof to be in the starry sky mode may include one of a first instruction and a second instruction. The first instruction may be an instruction to instruct to: gradually turn on the light-emitting apparatus of the sunroof while the sunshade apparatus is slowly retracted. The second instruction may be an instruction to instruct to: gradually turn off the light-emitting apparatus of the sunroof while the sunshade apparatus is slowly extended. Content instructed by the first instruction (that is, gradually turning on the light-emitting apparatus of the sunroof while the sunshade apparatus is slowly retracted) and content instructed by the second instruction (that is, gradually turning off the light-emitting apparatus of the sunroof while the sunshade apparatus is slowly extended) may be interchanged, which are not limited herein.

Under the first instruction, when the sunshade apparatus is slowly retracted, an area of an obstructed region of the sunroof that is obstructed by the sunshade apparatus gradually decreases, and an area of an unobstructed region that is not obstructed by the sunshade apparatus gradually increases. Under the second instruction, when the sunshade apparatus is slowly extended, an area of an obstructed region of the sunroof that is obstructed by the sunshade apparatus gradually increases, and an area of an unobstructed region that is not obstructed by the sunshade apparatus gradually decreases.

In some embodiments, whether the instruction for enabling the sunroof to be in the starry sky mode is the first instruction or the second instruction may be determined based on an instruction input by the user. When the instruction input by the user is an instruction for "entering the starry sky mode" and "slowly retracting the sunshade apparatus", the vehicle can determine that the instruction for enabling the sunroof to be in the starry sky mode is the first instruction. When the instruction input by the user is an instruction for "entering the starry sky mode" and "slowly extending the sunshade apparatus", the vehicle can determine that the instruction for enabling the sunroof to be in the starry sky mode is the second instruction.

In some embodiments, the vehicle is equipped with a receiving apparatus for receiving an instruction input by the user. The receiving apparatus may be one of a center control screen of a touch-screen vehicle-mounted computer, a voice control system configured to receive external voice, an image collection system configured to perform facial recognition, and a fingerprint recognition system configured to collect a user fingerprint. Certainly, other types of receiving apparatuses are also possible, which are not limited in detail in the embodiments of this application.

The receiving apparatus may be configured to receive various types of instructions input by the user. The instruction generally refers to any form of signal input that can enable the vehicle sunroof to be in the starry sky mode. In some embodiments, the instruction may be an instruction in any one of the following forms: a touch instruction, a voice instruction, a gesture instruction, an expression instruction, a fingerprint instruction, and the like.

For example, when the user wants the vehicle sunroof to enter the starry sky mode, the user may tap the central control screen on the vehicle-mounted computer, so that a function option of the "starry sky mode" displayed on the central control screen is set to "on". Alternatively, when the user wants the vehicle sunroof to enter the starry sky mode, the user may input an instruction for "entering the starry sky mode" to the voice control system by speaking or shouting.

For another example, when the user wants the sunshade apparatus to gradually retract, the user may operate a button for retracting the sunshade apparatus or extending the sunshade apparatus. Alternatively, an instruction for "retracting the sunshade apparatus" or "extending the sunshade apparatus" may be input through the voice control system.

After receiving the instruction input by the user, the receiving apparatus of the vehicle can send the instruction to a domain controller of the vehicle. The domain controller of the vehicle can then determine, according to the instruction, that the instruction for enabling the sunroof to be in the starry sky mode is the first instruction or the second instruction.

Step S1200: control, according to the instruction for enabling the sunroof to be in the starry sky mode, a luminous area of the sunroof and an area of an obstructed region of the sunroof that is obstructed by the sunshade apparatus.

The luminous area of the sunroof is an area of a luminous region of the sunroof. The luminous region of the sunroof may be an entire region that is not obstructed by the sunshade apparatus, or may be a part of the region. In addition, the difference between the luminous area of the sunroof and an area of an unobstructed region of the sunroof that is not obstructed by the sunshade apparatus is less than a preset value. That is, the luminous area of the sunroof can continuously increase as the area of the unobstructed region of the sunroof increases, and decrease as the area of the unobstructed region decreases.

In some embodiments, the difference between the luminous area of the sunroof and the area of the unobstructed region of the sunroof that is not obstructed by the sunshade apparatus is: the difference between the area of the luminous region of the sunroof and the area of the unobstructed region of the sunshade apparatus along the longitudinal direction of the vehicle. This difference needs to be less than a preset difference.

In the embodiment of this application, movement of the sunshade apparatus and turning-on of the light-emitting apparatus may be asynchronous. For example, a retracting speed of the sunshade apparatus is greater than a turning-on speed of the light-emitting apparatus. In this case, as the sunshade apparatus is retracted, the light-emitting apparatus in a small region included in the unobstructed region of the sunroof is not turned on. For another example, an extending speed of the sunshade apparatus is smaller than a turning-off speed of the light-emitting apparatus. In this case, as the sunshade apparatus is extended, the light-emitting apparatus in a small region included in the obstructed region of the sunroof that is obstructed by the sunshade apparatus is not turned off.

In some embodiments, when the closer the preset difference described above is to 0, it indicates that turning-on of the light-emitting apparatus is more synchronized with the retracting of the sunshade apparatus, or turning-off of the light-emitting apparatus is more synchronized with the extending of the sunshade apparatus. In this case, the shorter the time it takes for the user to wait for the sunroof to present the starry sky effect, the better the user experience. The preset difference may be set according to a specific sunroof control requirement, which is not specifically limited herein.

In some embodiments, a ratio between the luminous area of the sunroof and the area of the unobstructed region can meet a preset ratio range, so that the difference between the luminous area and the area of the unobstructed region is less than the preset difference. The closer the preset ratio value is to 1, the closer the preset difference is to 0. The preset difference range may be set according to a specific sunroof control requirement, which is not specifically limited herein.

After the vehicle according to the embodiment of this application receives the instruction for enabling the sunroof to be in the starry sky mode, the luminous area of the sunroof and the area of the obstructed region of the sunroof that is obstructed by the sunshade apparatus can be controlled according to the instruction, and the difference between the luminous area of the sunroof and the area of the unobstructed region of the sunroof that is not obstructed by the sunshade apparatus is less than the preset value. In other words, the method according to the embodiment of this application enables the vehicle sunroof to be luminous to present the starry sky effect when the sunshade apparatus moves. Compared with a manner in which starry sky effect can be presented only after the sunshade apparatus moves to a position where the starry sky sunroof is completely unobstructed, this application reduces time required for the sunroof to present the starry sky effect, thereby reducing time the user spends waiting for the sunroof to present the starry sky effect, and effectively enhancing the user experience, and can further enable the sunroof to present the starry sky effect based on regions, thereby improving flexibility of presenting the starry sky effect of the sunroof.

It will be understood that before the sunroof enters the starry sky mode to achieve the starry sky effect, the sunroof needs to be in a completely closed state.

In the embodiment of this application, in a case where the sunroof is a movable apparatus mounted on the top of the vehicle, the vehicle may detect the status of the sunroof before the sunroof enters the starry sky mode to achieve the starry sky effect. When the vehicle detects that the sunroof is in an open state, the sunroof can be controlled to be closed and in the completely closed state.

In a case where the sunroof is a fastened apparatus mounted on the top of the vehicle, for example, a panoramic sunroof in a fastened form, because the sunroof is always in the completely closed state, before the sunroof is controlled to enter the starry sky mode, the vehicle does not need to detect an on/off status of the sunroof.

In the embodiment of this application, both the sunroof and the light-emitting elements disposed on the sunroof may be obstructed by the sunshade apparatus. When the sunroof and the light-emitting elements are completely obstructed by the sunshade apparatus, the sunroof cannot create the starry sky effect within the vehicle. Therefore, before the sunroof achieves the starry sky effect through illumination of the light-emitting elements, the vehicle can obtain a status of the sunshade apparatus in advance. The status of the sunshade apparatus may include one of an obstructed state and an unobstructed state. The unobstructed state refers to: a completely unobstructed state. The obstructed state may include: one of a partially obstructed state and a completely obstructed state.

In some embodiments, the vehicle can obtain the status of the sunshade apparatus in response to the instruction for enabling the sunroof to be in the starry sky mode. For example, after the receiving apparatus of the vehicle receives the user instruction for enabling the sunroof to be in the starry sky mode, the domain controller of the vehicle can read a relative position relationship between the sunshade apparatus and the sunroof, to obtain the status of the sunshade apparatus.

In some embodiments, after the vehicle receives the instruction for enabling the sunroof to be in the starry sky mode through the receiving apparatus, the status of the sunroof can be determined first. When determining that the sunroof is in a completely closed state, the vehicle may read the relative position relationship between the sunshade apparatus and the sunroof, to obtain the status of the sunshade apparatus.

In some embodiments, the instruction for enabling the sunroof to be in the starry sky mode is the first instruction. In this case, as shown in FIG. 2, step S1200 may include steps S2100 to S2200.

Step S2100: control, according to a first instruction, the sunshade apparatus to move to decrease the area of the obstructed region of the sunroof that is obstructed by the sunshade apparatus.

In the embodiment of this application, the vehicle can control, according to the first instruction, the sunshade apparatus to move to retract the sunshade apparatus, so that the area of the obstructed region of the sunroof decreases, thereby increasing the area of the unobstructed region of the sunroof.

Step S2200: control, according to the first instruction, the plurality of light-emitting elements, to enable light-emitting elements located in the unobstructed region of the sunroof to be in an on state, and light-emitting elements located in the obstructed region of the sunroof to be in an off state, to control the luminous area of the sunroof.

In the embodiment of this application, the vehicle can simultaneously turn on the light-emitting elements in the unobstructed region as the sunshade apparatus moves, or turn on the light-emitting elements located in the unobstructed region when the difference between the area of the unobstructed region of the sunroof that is not obstructed by the sunshade apparatus and the area of the current luminous region (that is, the luminous area) of the sunroof is the preset value.

The vehicle may be provided with a drive apparatus that drives the sunshade apparatus to move. The driving apparatus is provided with a sensor. The sensor can be configured to monitor the position of the sunshade apparatus in real time. Optionally, the sensor may be a Hall element.

In one example, when it is detected that the sunshade apparatus moves, the drive apparatus can send a Hall signal to the domain controller of the vehicle. Correspondingly, the domain controller can obtain the Hall signal. Then, the domain controller can obtain, based on the Hall signal, a moving distance S1 of the sunshade apparatus, and synchronously turn on the light-emitting elements in a first region of the sunroof. The first region is a region of the sunroof that is exposed by the sunshade apparatus from the beginning to the end of movement. The length of the first region is the moving distance S1, and the length direction is parallel to the longitudinal direction of the sunroof.

It is assumed that the plurality of light-emitting elements are distributed at equal intervals on the sunroof, and a distance between adjacent light-emitting elements is S2. In this case, a number N of the light-emitting elements that are turned on during a movement process of the sunshade apparatus may meet: N=S1/S2.

In the embodiment of this application, the light-emitting element located in the obstructed region is always in the off state. In this way, unnecessary energy waste can be reduced.

As described above, the obstructed state of the sunshade apparatus may include one of the partially obstructed state and the completely obstructed state, that is, the sunshade apparatus may be in the partially obstructed state or may be in the completely obstructed state. When the sunshade apparatus is in the completely obstructed state, the sunshade apparatus completely obstructs the sunroof.

In the embodiment of this application, when the sunshade apparatus is in the partially obstructed state, the unobstructed region of the sunroof that is not obstructed by the sunshade apparatus may include: an original unobstructed region and a new unobstructed region. The original unobstructed region is an unobstructed region before the sunshade apparatus moves. The new unobstructed region is an unobstructed region that increases during the movement of the sunshade apparatus.

In this case, a process of turning on the light-emitting elements in the unobstructed region may include: turning on light-emitting elements located in the original unobstructed region, and turning on light-emitting elements located in the new unobstructed region. The new unobstructed region is an unobstructed region that increases as the sunshade apparatus is retracted.

In some embodiments, in the plurality of light-emitting elements, the light-emitting elements located in the new unobstructed region can be simultaneously turned on when the sunshade apparatus moves to decrease the area of the obstructed region. That is, when the vehicle controls, according to the first instruction, the sunshade apparatus to move to increase the area of the unobstructed region, the light-emitting elements in the new unobstructed region can be simultaneously turned on. In this way, time for the user to wait for the sunroof to achieve the starry sky effect can be further reduced, thereby enhancing user experience.

In some embodiments, the light-emitting elements in the original unobstructed region can be turned on in advance. The sunshade apparatus is then controlled to move and the light-emitting elements in the new unobstructed region are synchronously turned on.

In one example, when it is detected that the sunshade apparatus moves, the drive apparatus can send a Hall signal to the domain controller of the vehicle. Correspondingly, the domain controller of the vehicle obtains the Hall signal and obtains, based on the Hall signal, a position of the sunshade apparatus and a distance S3 of the unobstructed region of the sunroof that is not obstructed by the sunshade apparatus, and synchronously turns on the light-emitting elements located in a second region. The length of the second region is the distance S3 of the unobstructed region, and the length direction is the longitudinal direction of the sunroof.

It is assumed that the plurality of light-emitting elements are distributed at equal intervals on the sunroof, and a distance between adjacent light-emitting elements is S2. In this case, a number N1 of the light-emitting elements that are turned on in advance before the sunshade apparatus moves meets: N1=S3/S2.

After turning on the light-emitting elements in the unobstructed region of the sunroof, the domain controller of the vehicle can control the sunshade apparatus to move and obtain a moving distance S4 of the sunshade apparatus, and simultaneously turn on the light-emitting elements in a third region when the sunshade apparatus moves. In this case, a number of the light-emitting elements that are turned on is N2=S4/S2. The third region is a region of the sunroof that is exposed by the sunshade apparatus from the beginning to the end of movement. A length of the third region is the moving distance S4, and the length direction is parallel to the longitudinal direction of the sunroof.

It will be understood from the foregoing description that, in the embodiment of this application, the light-emitting apparatus extending along the longitudinal direction of the sunroof for illuminating the sunroof is disposed on the top of the vehicle, and the light-emitting apparatus includes the plurality of light-emitting elements. In addition, when the vehicle controls the sunshade apparatus to move to increase the area of the unobstructed region of the sunroof that is not obstructed by the sunshade apparatus, the light-emitting elements that are not obstructed by the sunshade apparatus can be turned on. Therefore, the sunroof presents the starry sky effect by turning on the light-emitting elements based on regions and segments. In addition, when the sunshade apparatus is controlled to move to increase the area of the unobstructed region of the sunshade apparatus, the light-emitting elements located in the obstructed region are in the off state, thereby reducing energy waste.

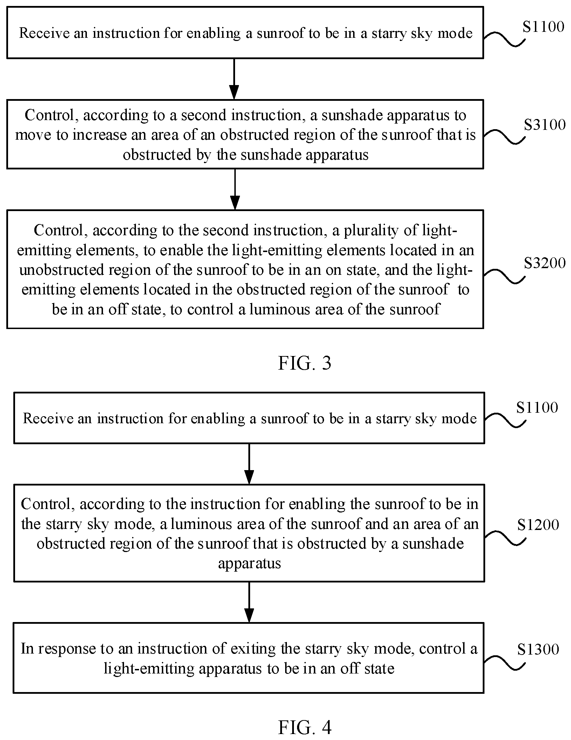

In some embodiments, the instruction for enabling the sunroof to be in the starry sky mode is the second instruction. In this case, as shown in FIG. 3, step S1200 may include steps S3100 to S3200.

Step S3100: control, according to the second instruction, the sunshade apparatus to move to increase the area of the obstructed region of the sunroof that is obstructed by the sunshade apparatus.

In the embodiment of this application, the vehicle can control, according to the second instruction, the sunshade apparatus to move to extend the sunshade apparatus, so that the area of the unobstructed region of the sunroof decreases, thereby increasing the area of the obstructed region of the sunroof.

Step S3200: control, according to the second instruction, the plurality of light-emitting elements, to enable light-emitting elements located in the unobstructed region of the sunroof to be in an on state, and light-emitting elements located in the obstructed region of the sunroof to be in an off state, to control the luminous area of the sunroof.

In the embodiment of this application, the vehicle can simultaneously turn off the light-emitting elements in the obstructed region as the sunshade apparatus moves, or turn off the light-emitting elements located in the obstructed region when the difference between the area of the unobstructed region of the sunroof and the area of the current luminous region of the sunroof is the preset value.

In some embodiments, when the sunshade apparatus is in the partially obstructed state, the obstructed region of the sunroof that is obstructed by the sunshade apparatus may include: an original obstructed region and a new obstructed region. The original obstructed region is an obstructed region before the sunshade apparatus moves. The new obstructed region is an obstructed region that increases during the movement of the sunshade apparatus.

In this case, a process of turning off the light-emitting elements in the obstructed region may include: turning off light-emitting elements in the original obstructed region, and turning off light-emitting elements in the new obstructed region. The new obstructed region is an obstructed region that increases as the sunshade apparatus is extended.

In some embodiments, in the plurality of light-emitting elements, the light-emitting elements located in the new obstructed region can be simultaneously turned on when the sunshade apparatus moves to increase the area of the obstructed region. That is, when the vehicle controls, according to the second instruction, the sunshade apparatus to move to increase the area of the obstructed region, the light-emitting elements in the new obstructed region can be simultaneously turned off. In this way, time for the user to wait for the sunroof to achieve the starry sky effect can be further reduced, thereby enhancing user experience. In addition, energy waste can be reduced.

In some embodiments, the light-emitting elements in the original obstructed region can be turned off in advance. The sunshade apparatus is then controlled to move and the light-emitting elements in the new obstructed region are synchronously turned off.

For a method for determining a number of light-emitting elements that are turned off in advance before the sunshade apparatus moves and a number of light-emitting elements that are turned off during moving, reference may be made to a method for determining a number of light-emitting elements that are turned on in the embodiments of this application, which will not be described in detail herein.

In some embodiments, when the sunshade apparatus is in the completely unobstructed state, the sunshade apparatus completely exposes the sunroof. In this case, the light-emitting elements on the sunroof are all in the on state.

It will be understood from the foregoing description that when the vehicle controls the sunshade apparatus to move to increase the area of the obstructed region of the sunroof that is obstructed by the sunshade apparatus, the light-emitting elements obstructed by the sunshade apparatus are turned off, and the light-emitting elements located in the unobstructed region are still in the on state. That is, the sunroof can present the starry sky effect by turning off the light-emitting elements based on regions and segments. In addition, the method can be convenient for the user to control, enabling a desired partial region of the sunroof required by the user to present the starry sky effect.

In some embodiments, the sunroof control method according to the embodiments of this application may further include step S4100.

Step S4100: in a process of controlling the sunshade apparatus to move, when a third instruction used to instruct the sunshade apparatus to stop moving is received, control the sunshade apparatus to stop moving and maintain a current status of the light-emitting apparatus.

The third instruction generally means any form of signal input that can control the sunshade apparatus to stop moving. In some embodiments, the third instruction may be an instruction in any one of the following forms: a touch instruction, a voice instruction, a gesture instruction, an expression instruction, a fingerprint instruction, and the like.

After the vehicle sunroof enters the starry sky mode, the vehicle can synchronously turn on the light-emitting elements that are not obstructed by the sunshade apparatus as the sunshade apparatus moves, so that the sunroof presents the starry sky effect based on regions and segments. When the user wants to experience the starry sky effect in a partial region at some point, the third instruction can be issued during movement of the sunshade apparatus. After receiving the third instruction, the vehicle may control the sunshade apparatus to stop moving, and maintain the light-emitting elements that have been turned on in the on state, to ensure that the vehicle sunroof can present the starry sky effect based on regions and segments, thereby meeting different requirements of the user.

In some embodiments, as shown in FIG. 4, the vehicle sunroof control method according to the embodiment of this application may further include step S1300.

Step S1300: in response to an instruction for exiting the starry sky mode, control the light-emitting apparatus to be in the off state.

In the embodiment of this application, the instruction for exiting the starry sky mode may include any one of the following instructions: an instruction for opening the sunroof; an instruction for opening a vehicle door; and an instruction for disabling the starry sky mode.

In some embodiments, the instruction for exiting the starry sky mode may be input by the user. For example, a receiving apparatus for receiving the instruction is mounted on the vehicle. The receiving apparatus may be a receiving apparatus for receiving the first instruction and the second instruction. The instruction for "exiting the starry sky mode" generally means any form of signal input that can cause the vehicle to exit the starry sky mode.

In some embodiments, the "exiting the starry sky mode" may be an instruction in any one of the following forms: a touch instruction, a voice instruction, a gesture instruction, an expression instruction, a fingerprint instruction, and the like. For example, when the user wants the vehicle sunroof to exit the starry sky mode, the user may tap the central control screen on the vehicle-mounted computer, so that a function option of the "starry sky mode" displayed on the central control screen is set to "off". Alternatively, when the user wants the vehicle sunroof to exit the starry sky mode, the user may input an instruction for "exiting the starry sky mode" to the voice control system by speaking or shouting.

After receiving the instruction input by the user, the receiving apparatus of the vehicle can send the instruction to a domain controller of the vehicle. The domain controller of the vehicle can then control the sunroof to exit the starry sky mode according to the instruction.

In some embodiments, the vehicle may control the sunshade apparatus to move to increase the obstructed region of the sunroof, and synchronously turn off the light-emitting elements that are obstructed by the sunshade apparatus, so that the sunroof exits the starry sky mode and stops presenting the starry sky effect.

It will be understood that in a process of turning off the light-emitting elements as the sunshade apparatus moves, an objective of stopping the starry sky effect based on regions and segments can be implemented.

After receiving the instruction for "exiting starry sky mode" sent by the user, the receiving apparatus of the vehicle obtains a position relationship between the sunshade apparatus and the sunroof, thereby obtaining a status of the sunshade apparatus.

In some embodiments, when the instruction for exiting the starry sky mode is an instruction for "opening the sunroof" input by the user, the vehicle can control the sunroof to be in an open state in response to the instruction for "opening the sunroof", and control the light-emitting elements disposed on the sunroof to be in the off state, thereby controlling the sunroof to exit the starry sky mode, and stop presenting the starry sky effect.

It will be understood that in a case where the sunroof is a movable apparatus mounted on the top of the vehicle, the instruction for exiting the starry sky mode may be the instruction for "opening the sunroof".

In some embodiments, in a case where the instruction for exiting the starry sky mode is the instruction for "opening the vehicle door", the vehicle may control the vehicle door to be in an open state in response to the instruction for "opening the vehicle door", and control the light-emitting elements disposed on the sunroof to be in the off state, thereby controlling the sunroof to exit the starry sky mode and stop presenting the starry sky effect when the user gets off the vehicle.

Certainly, the instruction for exiting the starry sky mode may alternatively be an instruction in another form as long as exiting the starry sky mode can be triggered. This is not described in detail in the embodiments of this application.

It will be noted that the foregoing description of the at least one embodiment is merely illustrative and should not be construed as limiting the scope of the embodiment or its application or use.

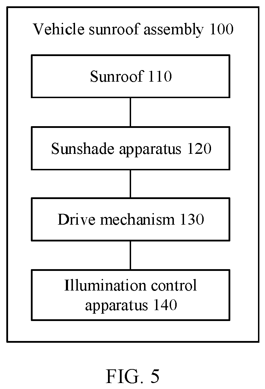

An embodiment of this application further provides a vehicle sunroof assembly. As shown in FIG. 5, the sunroof assembly 100 may include a sunroof 110 and a sunshade apparatus 120. The sunshade apparatus 120 is movable relative to the sunroof 110 to obstruct or expose the sunroof 110.

In the embodiment of this application, a luminous area of the sunroof 110 may change with an area of an obstructed region of the sunroof 110 that is obstructed by the sunshade apparatus 120. In addition, the difference between the luminous area of the sunroof 110 and an area of an unobstructed region of the sunroof 110 that is not obstructed by the sunshade apparatus is less than a preset value.

In some embodiments, a light-emitting apparatus configured to illuminate the sunroof is disposed on the top of the vehicle. The light-emitting apparatus extends along a longitudinal direction of the sunroof 110. The longitudinal direction of the sunroof 110 is a longitudinal direction of the vehicle.

In some embodiments, the light-emitting apparatus includes a plurality of light-emitting elements. The plurality of light-emitting elements are sequentially arranged along the longitudinal direction of the sunroof 110.

In some embodiments, the vehicle sunroof assembly 100 further includes a drive mechanism 130 and an illumination control apparatus 140. The drive mechanism 130 is configured to drive the sunshade apparatus 120 to move relative to the sunroof 110, and the illumination control apparatus 140 is configured to adjust the luminous area of the sunroof.

In some embodiments, the drive mechanism 130 is connected to the illumination control apparatus 140. The drive mechanism 130 may be further configured to send a first signal representing a position of the sunshade apparatus 120 relative to the sunroof 110. The illumination control apparatus 140 may be further configured to adjust the luminous area of the light-emitting apparatus based on the first signal.

The first signal may include a signal representing that the sunshade apparatus 120 is retracted. In this case, the illumination control apparatus 140 may be configured to decrease the area of the obstructed region of the sunroof 110 that is obstructed by the sunshade apparatus 120 based on the first signal, to increase the luminous area of the sunroof. Alternatively, the first signal may include a signal representing that the sunshade apparatus 120 is extended. In this case, the illumination control apparatus 140 may increase the area of the obstructed region of the sunroof 110 that is obstructed by the sunshade apparatus 120 based on the first signal, to decrease the luminous area of the sunroof.

The vehicle sunroof assembly according to the embodiment of this application includes the sunroof and the sunshade apparatus. The sunshade apparatus is movable relative to the sunroof to obstruct or expose the sunroof. The difference between the luminous area of the sunroof and the area of the unobstructed region of the sunroof that is not obstructed by the sunshade apparatus is less than the preset value. In other words, the vehicle sunroof can be luminous to present starry sky effect when the sunshade apparatus moves. Compared with a manner in which starry sky effect can be presented only after the sunshade apparatus moves to a position where the starry sky sunroof is completely unobstructed, this application reduces the time required for the sunroof to present the starry sky effect, thereby reducing the time the user spends waiting for the sunroof to present the starry sky effect, and effectively enhancing the user experience, and can further enable the sunroof to present the starry sky effect based on regions, thereby improving flexibility of presenting the starry sky effect of the sunroof.

An embodiment of this application provides a vehicle. A sunroof, a sunshade apparatus, and a light-emitting apparatus are disposed on the top of the vehicle, and the vehicle controls the sunshade apparatus by using the control method in any one of the foregoing embodiments.

An embodiment of this application provides a vehicle. The vehicle includes the sunroof assembly according to any one of foregoing embodiments.

It will be noted that all actions to obtain signals, information, or data in this application are performed in compliance with the corresponding data protection regulations and policies of the local country, and with authorization from the corresponding apparatus/account owner.

The embodiments of this application are described in a progressive manner. For same and similar parts in the embodiments, reference may be made to each other. Each embodiment focuses on describing differences from other embodiments. In particular, the apparatus and device embodiments are basically similar to the method embodiment, so that the description is relatively simple, and relevant parts can be found in the description of the method embodiment.

The foregoing describes specific embodiments of this application. Other embodiments are within the scope of the following claims. In some cases, the actions or steps set forth in the claims can be performed in a different order than in the embodiments and still achieve desired results. In addition, the processes depicted in the drawings do not necessarily require a specific or sequential order shown to achieve the desired results. In some implementations, multitasking and parallel processing are also possible or may be advantageous.

The embodiments of this application may be systems, methods, and/or computer program products. The computer program products may include a computer-readable storage medium on which computer-readable program instructions are loaded to cause a processor to implement aspects of the embodiments of this application.

Various aspects of the embodiments of this application are described herein with reference to flowcharts and/or block diagrams of the methods, apparatus (systems), and computer program products according to the embodiments of this application. It will be understood that each block of the flowchart and/or block diagram and a combination of blocks in the flowchart and/or block diagram can be implemented by the computer-readable program instructions.

The flowcharts and block diagrams in the accompanying drawings illustrate system architectures, functions, and operations possibly implemented by the systems, methods, and computer program products according to various embodiments of this application. In this regard, each block in the flowchart or block diagram may represent a module, program segment, or part of an instruction, and the module, program segment, or part of the instruction includes one or more executable instructions for implementing a specified logical function. In some alternative implementations, functions marked in the blocks may occur in a sequence different from that shown in the accompanying drawings. For example, two consecutive blocks may actually be executed substantially in parallel, and may sometimes be executed in a reverse order, depending on functions involved. It should also be noted that each block in the block diagrams and/or flowcharts, and a combination of blocks in the block diagrams and/or flowcharts can be implemented by a dedicated hardware-based system that perform specified functions or actions, or can be implemented by a combination of dedicated hardware and computer instructions. It is well known to people skilled in the art that implementation by hardware, implementation by software, and implementation by a combination of software and hardware are all equivalent.

The foregoing has described embodiments of this application. The foregoing descriptions are examples, not exhaustive, and are not limited to the disclosed embodiments. Many modifications and changes are apparent to people of ordinary skill in the art without departing from the scope of the illustrated embodiments. Selection of terms used herein is intended to best describe principles of embodiments, actual applications, or improvements to technologies in the market, or to enable other people of ordinary skill in the art to understand the embodiments disclosed in this specification.

## Claims

1. A vehicle sunroof control method, applied to a vehicle, a sunroof and a sunshade apparatus configured to obstruct the sunroof being disposed on a top of the vehicle, and the method comprising:
receiving an instruction for enabling the sunroof to be in a starry sky mode; and
controlling, according to the instruction, a luminous area of the sunroof and an area of an obstructed region of the sunroof that is obstructed by the sunshade apparatus, wherein a difference between the luminous area of the sunroof and an area of an unobstructed region of the sunroof that is not obstructed by the sunshade apparatus is less than a preset value.

2. The method according to claim 1, comprising a light-emitting apparatus configured to emit light for the sunroof being disposed on the top of the vehicle, the light-emitting apparatus extending along a longitudinal direction of the sunroof, and the longitudinal direction of the sunroof being a longitudinal direction of the vehicle.

3. The method according to claim 2, the light-emitting apparatus comprising a plurality of light-emitting elements, and the plurality of light-emitting elements being sequentially arranged along the longitudinal direction of the sunroof.

4. The method according to claim 3, the instruction comprising a first instruction, and controlling, according to the instruction, the luminous area of the sunroof and the area of the obstructed region of the sunroof that is obstructed by the sunshade apparatus comprising:
controlling, according to the first instruction, the sunshade apparatus to move to decrease the area of the obstructed region; and
controlling, according to the first instruction, the plurality of light-emitting elements, to enable light-emitting elements located in the unobstructed region to be in an on state, and light-emitting elements located in the obstructed region to be in an off state, to control the luminous area of the sunroof.

5. The method according to claim 4, the sunshade apparatus being in a partially obstructed state, and the unobstructed region comprising an original unobstructed region and a new unobstructed region.

6. The method according to claim 5, in the plurality of light-emitting elements, light-emitting elements located in the new unobstructed region being simultaneously turned on when the sunshade apparatus moves to decrease the area of the obstructed region.

7. The method according to claim 3, the instruction comprising a second instruction, and controlling, according to the instruction, the luminous area of the sunroof and the area of the obstructed region of the sunroof that is obstructed by the sunshade apparatus comprising:
controlling, according to the second instruction, the sunshade apparatus to move to increase the area of the obstructed region; and
controlling, according to the second instruction, the plurality of light-emitting elements, to enable light-emitting elements located in the unobstructed region to be in an on state, and light-emitting elements located in the obstructed region to be in an off state, to control the luminous area of the sunroof.

8. The method according to claim 7, the sunshade apparatus being in a partially obstructed state, and the obstructed region comprising an original obstructed region and a new obstructed region.

9. The method according to claim 8, in the plurality of light-emitting elements, light-emitting elements located in the new obstructed region being simultaneously turned off when the sunshade apparatus moves to increase the area of the obstructed region.

10. The method according to any one of claims 4 to 9, the method further comprising:
in a process of controlling the sunshade apparatus to move, when a third instruction used to instruct the sunshade apparatus to stop moving is received, controlling the sunshade apparatus to stop moving and maintaining a current status of the light-emitting apparatus.

11. The method according to any one of claims 2 to 9, the method further comprising:
in response to an instruction for exiting the starry sky mode, controlling the light-emitting apparatus to be in an off state.

12. The method according to claim 11, the instruction for exiting the starry sky mode comprising any one of the following instructions:
an instruction for opening the sunroof;
an instruction for opening a vehicle door; and
an instruction for disabling the starry sky mode.

13. A vehicle sunroof assembly, comprising:
a sunroof; and
a sunshade apparatus, the sunshade apparatus being movable relative to the sunroof to obstruct or expose the sunroof; and
a luminous area of the sunroof changing with an area of an obstructed region of the sunroof that is obstructed by the sunshade apparatus, and a difference between the luminous area of the sunroof and an area of an unobstructed region of the sunroof that is not obstructed by the sunshade apparatus being less than a preset value.

14. The sunroof assembly according to claim 13, a light-emitting apparatus configured to emit light for the sunroof being disposed on the top of the vehicle, the light-emitting apparatus extending along a longitudinal direction of the sunroof, and the longitudinal direction of the sunroof being a longitudinal direction of the vehicle.

15. The sunroof assembly according to claim 14, the light-emitting apparatus comprising a plurality of light-emitting elements, and the plurality of light-emitting elements being sequentially arranged along the longitudinal direction of the sunroof.

16. The sunroof assembly according to any one of claims 13 to 15, the sunroof assembly further comprising a drive mechanism and an illumination control apparatus, the drive mechanism being configured to drive the sunshade apparatus to move relative to the sunroof, and the illumination control apparatus being configured to adjust the luminous area of the sunroof.

17. The sunroof assembly according to claim 16, the drive mechanism being connected to the illumination control apparatus; and
the drive mechanism being further configured to send a first signal representing a position of the sunshade apparatus relative to the sunroof, and the illumination control apparatus being further configured to adjust the luminous area of the light-emitting apparatus based on the first signal.

18. A vehicle, a sunroof, a sunshade apparatus, and a light-emitting apparatus being disposed on the top of the vehicle, and the vehicle controlling the sunshade apparatus by using the control method according to any one of claims 1 to 12.

19. A vehicle, comprising the sunroof assembly according to any one of claims 13 to 17.
